# EUROPEAN PATENT SPECIFICATION

(11) **EP 1 286 522 B1**
(45) Date of publication and mention of the grant of the patent: **17.12.2008**
(21) Application number: 02018274.7
(22) Date of filing: 22.08.2002
(51) Int. Cl.: H04M 1/02

(54) **Foldable wireless terminal**
Klappbares und schnurloses Endgerät
Terminal pliable et sans fil

(30) Priority: 23.08.2001 KR 2001051182
(43) Date of publication of application: 26.02.2003
(73) Proprietor: SAMSUNG ELECTRONICS CO., LTD., Suwon-City, Kyungki-do (KR)
(72) Inventor: Kim, Ki-Hyun, Paldal-gu, Suwon-shi, Kyonggi-do (KR); Song, Hyun-Myung, Kwangjin-gu, Seoul (KR)
(74) Representative: Grünecker, Kinkeldey, Stockmair & Schwanhäusser Anwaltssozietät

(56) References cited:
- GB-A- 2 355 043
- US-A- 5 722 295
- US-A- 6 085 387
- DATABASE WPI Section EI, Week 200174 Derwent Publications Ltd., London, GB; Class W02, AN 2001-646378 XP002272437 -& KR 2001 045 785 A (SAMSUNG ELECTRONICS CO LTD), 5 June 2001 (2001-06-05)
- PATENT ABSTRACTS OF JAPAN vol. 2000, no. 09, 13 October 2000 (2000-10-13) -& JP 2000 161336 A (IINO MASASHI;WATANABE KAZUKO), 13 June 2000 (2000-06-13)

## Description

### PRIORITY

This application claims priority to an application entitled "Foldable, Portable Wireless Terminal for Automatic and Manual Use" filed in the Korean Industrial Property Office on August 23, 2001 and assigned Serial No. 2001-51182.

### BACKGROUND OF THE INVENTION

### 1. Field of the Invention

The present invention relates generally to a portable wireless terminal or radiotelephone having a sub-body that can be opened or closed automatically or manually with respect to a main body, and in particular, to a foldable, portable wireless terminal for automatic and manual use that has a deceleration module so configured as to facilitate assembly and reduce production cost.

### 2. Description of the Related Art

A foldable, portable wireless terminal is a terminal having a sub-body that can be opened or closed with respect to a main body. Such foldable mobile terminals include a flip cover type, a folder type, and a flip-up type.

A portable wireless terminal having a sub-body that can be opened or closed with respect to a main body manually or automatically (electrically) using a driving device has been recently provided together with various efforts to make such portable wireless terminals smaller, thinner and lighter.

In order to meet such user demands, Korea Patent Publ. Nr. 10-0663572-0000" AUTOMATIC FOLDED PORTABLE RADIOTELEPHONE", which was filed on July 6, 1999 and commonly assigned to the Assignee of this application, proposed a foldable terminal having a sub-body automatically (electrically) opened or closed with respect to a main body by simple switching. The operation of the sub-body only by an automatic operation, however, increases power consumption and may cause loose closing of the sub-body to the main body. Consequently, a variety of user demands cannot be satisfied.

To further satisfy user demands, Korea Patent Publ. Nr. 10-2001-0045785" PORTABLE RADIOTELEPHONE BEING AUTOMATICALLY/MANUALLY FOLDED", which was filed on November 8, 1999 and commonly assigned to the Assignee of this application, proposed an improved wireless terminal which is capable of folding manually and automatically. This wireless terminal has a hinge shaft rotatable by a deceleration module, a hinge cam rotatable by the hinge shaft, and a hollow hinge arm for enclosing the deceleration module, the hinge shaft, and the hinge cam in series. Here, in a manual mode, the hinge shaft is retractable only in an axial direction while rotating together with the hinge arm. That is, the hinge shaft mounted to a driving shaft of the deceleration module can rotate by rotation of the driving shaft only in an automatic mode, but it cannot rotate in the manual mode. The deceleration module includes a combination of gear rings that decrease the rotation speed of a driving motor and increase its rotating force, thereby enabling automatic opening and closing of a sub-body with respect to a main body. However, since the gear rings are formed of a metal, its operation is not smooth and makes noise.

For the purpose of eliminating noise and achieving smoother operation, Korea Patent Publ. Nr. 10-2002-0056989 "DECELERATING MODULE FOR AUTOMATIC FOLDED PORTABLE RADIOTELEPHONE", which was filed on December 30, 2000 and commonly assigned to the Assignee of this application, proposed a plastic guide gear for guiding a plurality of metal spur gears. However, the spur gears in a deceleration module still make noise since they are metal. Moreover, use of many components involved renders the assembly process lengthy and complicated, resulting in increase of production cost.

Furthermore, US 6,085,387 "Hinge device" shows a hinge coupling a body of the ready telephone with the button cover. The hinge is modulated and miniaturized. The hinge device allows the smooth and accurate relative motion between a cam portion and a cam follower. The hinge has a cam, a first member, a second member and a spring. The cam has a partially closed end and an open end. The first member has a shaft protruding through the partially closed end of the cam and two protrusions defining a cam follower. The second member has a cam portion interacting with the cam follower. The spring pushes the second member toward the first member. The first member, the second member and the spring are contained within the can in turn.

Furthermore, from US 5,722,295 "Injection-molded gear for engine and manufacturing method therefore", an injection-molded gear for a utility engine is known. The gear has a high reliability, tenacity, and accuracy, capable of being manufactured at 10w cost without requiring cutting, and ensuring a substantial reduction in noise. An inner part of a cam crankshaft gear is formed of an insert ring of a sintered iron alloy. An outside portion and a toothed crest portion of the gear are formed by injection-molding a polyamide resin.

### Summary of the Invention

It is the object of the present invention to provide a sub-body opening/closing device for a radiotelephone with a reduced number of components of the hinge and thus the reduction of production costs.

This object is solved by the invention as claimed in the independent claims.

Preferred embodiments are defined by the dependent claims.

It is another aspect of the present invention to provide an automatically and manually foldable, portable wireless terminal having a hinge shaft integrally formed with components of a deceleration module in order to reduce the number of components and thus production cost.

It is still a further aspect of the present invention to provide an automatically and manually foldable, portable wireless terminal having a hinge shaft integrally formed with components of a deceleration module out of plastic material and thus to reduce production cost but to increase productivity in the manufacturing process.

In a preferred embodiment a foldable, portable wireless terminal is capable of folding/unfolding automatically and manually, which includes: a main body; a sub-body capable of folding and unfolding with respect to the main body; and an opening/closing device for automatically or manually opening or closing the sub-body with respect to the main body by user selection. The opening/closing device includes a hinge cam with an end fixed to the main body or the sub-body, and a deceleration module adapted to move axially and including an integrally formed hinge shaft, the hinge shaft adapted for selectively rotating the hinge cam in an automatic mode through rotation of a driving motor. Also provided are an elastic member for biasing the deceleration module axially and a hollow hinge arm for enclosing the hinge cam, the deceleration module and the elastic member in series, the hinge arm being mounted to the main body or the sub-body to act as a hinge module.

### BRIEF DESCRIPTION OF THE DRAWINGS

The above and other objects, features and advantages of the present invention will become more apparent from the following detailed description when taken in conjunction with the accompanying drawings in which:
FIG 1 is a perspective view of a portable wireless terminal that can be folded automatically and manually;
FIG 2 is a partial sectional view of a portable wireless terminal having an opening/closing device installed in a hinge arm according to a preferred embodiment of the present invention;
FIG 3 is an exploded perspective view of the opening/closing device according to the preferred embodiment of the present invention;
FIG 4 is an exploded perspective view of a deceleration module of the opening/closing device according to the preferred embodiment of the present invention;
FIG 5 is a partial sectional view of a module housing for the deceleration module according to the preferred embodiment of the present invention;
FIG 6 is a perspective view of a rotator of the deceleration module according to the preferred embodiment of the present invention;
FIG 7 is a partial sectional view of the deceleration module according to the preferred embodiment of the present invention; and
FIG 8 is a sectional view of the deceleration module shown in FIG 7, taken along line A-A'.

### DETAILED DESCRIPTION OF THE PREFERRED EMBODIMENT

A preferred embodiment of the present invention will be described hereinbelow with reference to the accompanying drawings. In the following description, well-known functions or constructions are not described in detail since they would obscure the invention in unnecessary detail.

The present invention provides a portable terminal having a sub-body mounted on a main body such that the sub-body can be placed in an open or closed state with respect to the main body automatically (electrically) or manually. While an opening/closing device according to the present invention is described hereinbelow in the context of a folder-type portable terminal, it will be obvious to those skilled in the art that the opening/closing device is also applicable to other foldable portable terminals such as a flip-up type and a flip type.

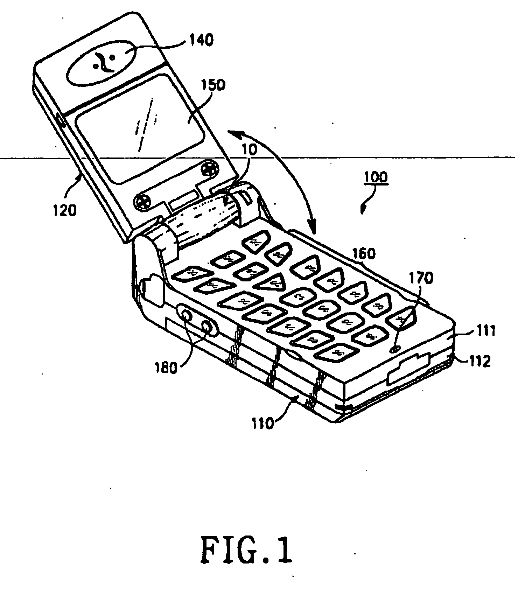

FIG 1 is a perspective view of an automatically and manually foldable, portable wireless terminal. Referring to FIG 1, the terminal 100 includes a main body 110 having an upper casing frame 111 and a lower casing frame 112, a sub-body 120 mounted to the main body 110 such that it can be opened or closed with respect to the main body 110 automatically or manually by user selection, and an opening/closing device 10 for opening and closing the sub-body 120 with respect to the main body 110.

The main body 110 preferably includes an antenna (not shown) installed at an uppermost end of the main body 110. An earpiece 140 is located at the sub-body 120 and an LCD (Liquid Crystal Display) module 150 is disposed below the earpiece 140 to display relevant information. A keypad 160 is disposed on the main body 110 for the user to input data and a microphone 170 is disposed under the keypad 160. Buttons 180 are provided on a side of the main body 110 to automatically open or close the sub-body 120 with respect to the main body 110. A hinge module is used in the terminal 100 to connect the main body 110 and the sub-body 120. The opening/closing device 10 functions to open and/or close the sub-body automatically or manually as well as working as a hinge arm.

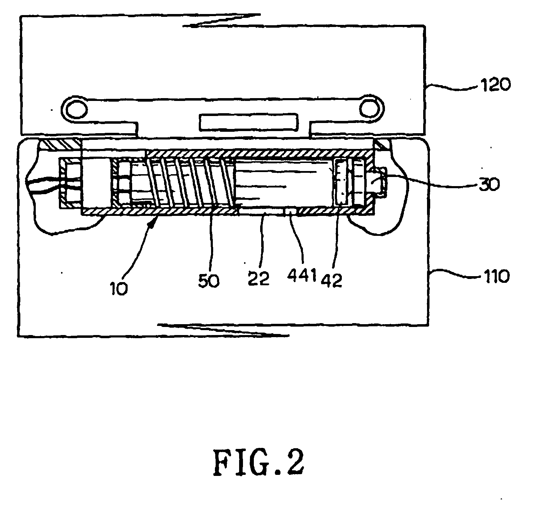

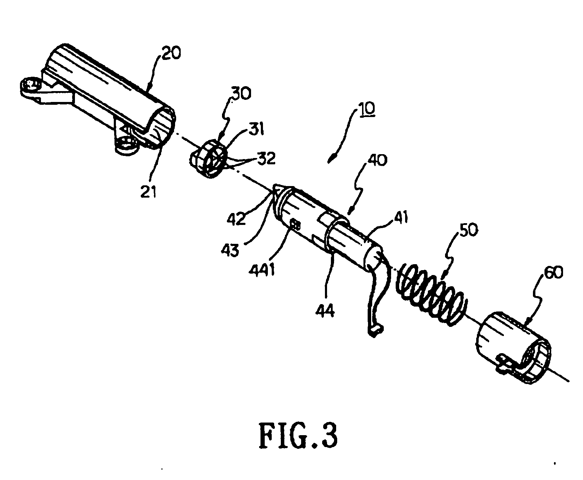

Referring now to FIGS. 2 and 3, FIG 2 is a partial sectional view of the portable wireless terminal having the opening/closing device installed in a hinge arm according to a preferred embodiment of the present invention, and FIG 3 is an exploded perspective view of the opening/closing device. The opening/closing device 10 includes a hinge cam 30 having one end mounted to the main body or the sub-body, a deceleration module 40 moveable only axially and having an end integrally formed with a hinge shaft 42 which is selectively rotatable in conjunction with the hinge cam 30 in an automatic or manual mode and the other end provided with a driving motor 41 for rotating the hinge shaft 42. The opening/closing device 10 further includes an elastic member 50 for biasing the deceleration module 40 axially, and a hollow hinge arm 20 fixed as a hinge module to the sub-body or the main body, for enclosing the hinge cam 30, the deceleration module 40, and the elastic member 50 in series.

The hinge arm 20 connects the main body to the sub-body and functions as a housing for the hinge cam 30 and the deceleration module 40 having the hinge shaft 42. Thus, no separate hinge housing is necessary in addition to the hinge arm 20.

The hinge cam 30 has a pair of peak portions 32 and a valley portion 31 defined between the peak portions 32 on the inner surface facing the hinge shaft 42. The outer surface of the hinge cam 30 partially protrudes from the hinge arm 20 and is mounted to the main body.

A protrusion 43 of a particular shape is formed on the surface of the hinge shaft 42 facing the hinge cam 30 for fitting with the valley portion 31 of the hinge cam. In an automatic mode, as the hinge shaft 42 rotates by rotation of the deceleration module 40, the protrusion 43 is caught between the peak portions 32 of the hinge cam 30, to thereby rotate the sub-body to an opening or closing position. That is, in an automatic mode, the protrusion 43 of the hinge shaft 42 is caught between the peak portions 32 of the hinge cam 30 and as a result, the hinge cam 30 rotates together with the hinge shaft 42. In a manual mode, the peak portions 32 of the hinge cam 30 push the protrusion 43 of the hinge, so that the deceleration module 40 retreats in the axial direction. A compressed coil spring can be used as the elastic member 50 for pressing the deceleration module 40 in the axial direction.

A hollow spacer 60 is inserted into a central cavity 21 of the hinge arm 20 to support one end of the elastic member 50 and a hollow hinge dummy (not shown) can be inserted into the spacer 60. One end of the compressed coil spring 50 disposed between the hinge dummy and the deceleration module 40 is supported by the spacer 60 as stated above and the other end thereof is supported by a step portion 44 defined on the outer circumferential surface of the deceleration module 40.

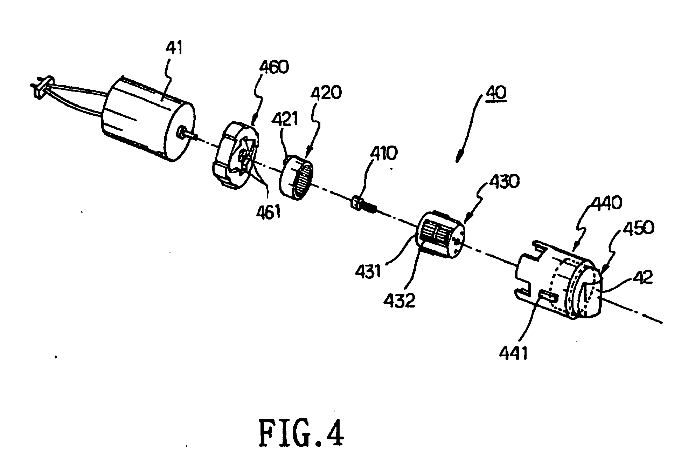

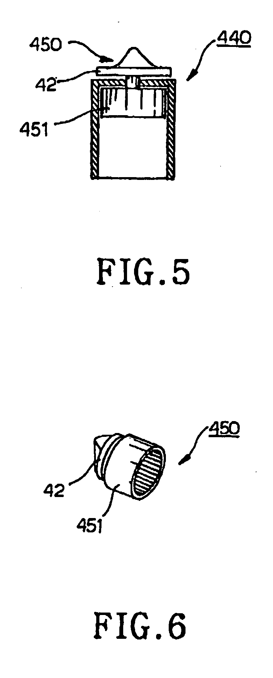

FIG 4 is an exploded perspective view of the deceleration module of the opening/closing device, FIG. 5 is a partial sectional view of a module housing for the deceleration module, and FIG. 6 is a perspective view of a rotator in the deceleration module according to the preferred embodiment of the present invention. Referring to FIGS. 4, 5 and 6, the deceleration module 40 includes a driving motor 41 with a spur gear 410 mounted on its driving axis, a hollow guide gear 420 having teeth on the inner circumferential surface thereof and fixed on the driving motor 41 with the spur gear 410 inserted into the hollow guide gear 420, and a gear module 430 that has a cylindrical box 431 with at least two spur gears 432 and is partially inserted into the guide gear 420 in teeth-engagement with the guide gear 420 and the spur gear 410. The deceleration module 40 further includes a rotator 450 having a rotating gear 451 with its teeth on the inner circumferential surface thereof to transfer rotational force by teeth-engagement with the spur gears 432, hinge shaft 42 integrally formed with the rotating gear 451, and module housing 440 having an end fixed to the driving motor 41, for housing the guide gear 420 and the gear module 430 such that the gear module 430 is rotatable within the rotating gear 451 of the rotator 450.

At least two spur gears 432, preferably three spur gears 432, are installed in the gear module 430, and the cylindrical box 431 and the spur gears 432 can be preferably formed out of plastic, for example, by injection molding. In order to permit movement of the deceleration module 430 only in the axial direction within the hinge arm 20, a protrusion 441 is formed in an appropriate position on the outer circumferential surface of the module housing 440 and a guide slit 22 (shown in FIG 2) is formed on the inner circumferential surface of the hinge arm 20 for guiding the protrusion 441 only in the axial direction. The guide gear 420 and the module housing 440 can be connected to a bracket 460 which is in turn mounted on the driving motor 41. Here, the module housing 440 is connected to the bracket 460 preferably by a snap-fit structure.

At least one protrusion 421 is disposed at a location in the guide gear 420 to fit into at least one recess 461 of the bracket 460 to prevent the rotation of the guide gear 420 on the bracket 460. Accordingly, the gear module 430 which is partially inserted into the guide gear 420, can rotate along the inner circumference of the guide gear 420. On the contrary, protrusions 421 can be formed on the bracket 460 and recesses 461 can be formed on the guide gear 420.

Referring to FIGS. 5 and 6, the module housing 440 and the rotator 450 are preferably formed of plastic, for example, by injection molding. The rotator 450 is rotatably mounted on the module housing 440 and can be made by injection molding together with the module housing 440. The rotating gear 451 of the rotator 450 is fit into the module housing 440 through the inner cavity of the module housing 440 such that it is rotatably engaged with parts of the gear module 430. The hinge shaft 42 is disposed outside the module housing 440 to interact with the hinge cam 30.

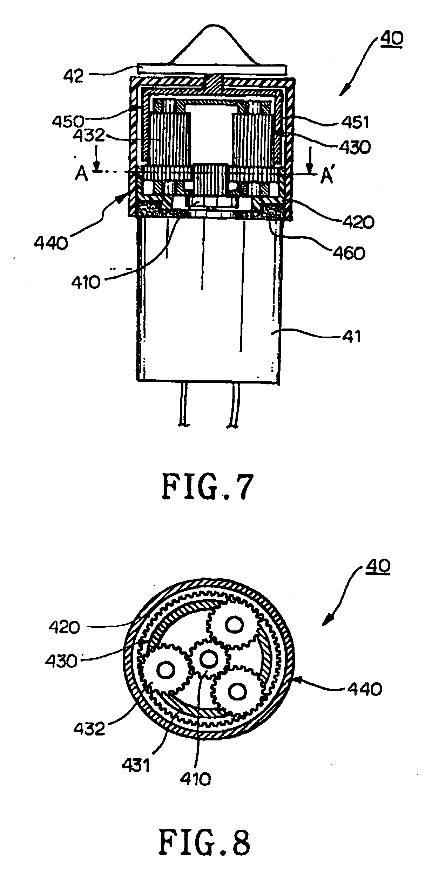

FIG 7 is a partially sectional view of the deceleration module according to the preferred embodiment of the present invention and FIG 8 is a sectional plan view of the deceleration module shown in FIG 7, taken along line A-A'. Referring to FIGS. 7 and 8, the spur gear 410 mounted on a driving shaft of the driving motor 41 is located between the spur gears 432 of the gear module 430. As a result, the multiple spur gears 432 of the gear module 430 rotate simultaneously with rotation of the spur gear 410 attached to the driving motor 41. Since the gear module 430 has its teeth engaged with the inner circumferential surface of the guide gear 420, the cylindrical box 431 rotates simultaneously with rotation of the spur gears 432. As the gear module 430 rotates along the inner circumference of the guide gear 420, its rotating speed decreases but its rotating force increases. The rotation of the gear module 430 causes rotation of the rotator 450 installed within the module housing 440 because a portion of the gear module 430 is teeth-engaged with the guide gear 420 and another portion of the gear module 430 is teeth-engaged with the rotating gear 451 of the rotator 450. It is noted that the guide gear 420 is spaced apart from the rotating gear 451, and it prevents interference between the guide gear 420 which is stationary and the rotating gear 451 which is rotatable. When the rotating gear 451 of the rotator 450 rotates, the hinge shaft 42 integrally formed with the rotator 451 rotates together and thereby causing the hinge cam 30 (shown in FIG 3) to rotate in association therewith. Rotation of the hinge cam 30 opens or closes the sub-body 120 from/to the main body. It is noted that the wireless terminal of the present invention includes a deceleration module of which some components (e.g., rotator 450) are integrally formed with the hinge shaft 42, preferably, by injection molding. Therefore, the number of parts, the number of assembly steps, and production cost can be reduced.

While the invention has been shown and described with reference to a certain preferred embodiment thereof, it will be understood by those skilled in the art that various changes in form and details may be made therein without departing from the spirit and scope of the invention as defined by the appended claims.

## Claims

1. A sub-body opening/closing device for a foldable radiotelephone (100) having a main body (110) and a sub-body (120), the opening/closing device being usable for automatically or manually opening or closing the sub-body with respect to the main body of the radiotelephone, the opening/closing device comprising:
a hinge cam (30) which has an end fixed to the main body or the sub-body;
a driving motor (41);
a deceleration module (40) axially moveable and including a hinge shaft (42)and a rotator (450), the hinge shaft selectively rotating the hinge cam in an automatic mode through rotation of the driving motor; and
an elastic member (50) for biasing the deceleration module axially;
**characterized by**
the rotator (450) having a rotating gear (451) that has teeth on the inner circumferential surface thereof to receive a force in teeth-engagement with at least one spur gear, the at least one spur gear being engaged with the driving motor; and
the hinge shaft (42) being integrally formed with the rotating gear.

2. The sub-body opening/closing device of claim 1 further comprising:
a hollow hinge arm (20) for enclosing the driving motor (41), the deceleration module (40) and the hinge shaft (42) therein.

3. The sub-body opening/closing device of claim 1 further comprising:
a hollow hinge arm (20) for enclosing the hinge cam (30), the deceleration module (40), and the elastic member (50) in series, the hinge arm (20) being mounted to the main body (110) or the sub-body (120) to act as a hinge module.

4. The sub-body opening/closing device of one of claims 1 to 3, wherein the deceleration module (40) further comprises:
the driving motor (41) having a spur gear (410) mounted on a driving shaft;
a hollow guide gear (420) mounted onto the driving motor with the spur gear of the driving motor inserted thereinto and having teeth on the inner circumferential surface thereof;
a gear module (430) having at least two rotatable spur gears (432) in a single cylindrical box (431) and being partially inserted into the guide gear in teeth-engagement with the guide gear and the spur gear of the driving motor, wherein the rotating gear (451) receives the force with the spur gears of the gear module; and
a module housing (440) having an end fixed to the driving motor, for enclosing the guide gear and the gear module, the gear module being rotatably disposed within the rotating gear of the rotator.

5. The sub-body opening/closing device of claim 4, wherein the guide gear (420) and the module housing (440) are fixed to a bracket (460) mounted on the driving motor (41).

6. The sub-body opening/closing device of claim 5, wherein the module housing (440) is configured to mount to the bracket (460) in a snap-fit structure.

7. The sub-body opening/closing device of claim 4, wherein the rotating gear (451) and the hinge shaft (42) of the rotator (450) are integrally formed of plastic by injection molding.

8. The sub-body opening/closing device of one of claims 2 or 3, wherein the hinge cam (30) has a pair of peak portions (32) and a valley portion (31) at the center thereof and the hinge shaft (42) has a protrusion (43) to be fit in the valley portion of the hinge cam.

9. The sub-body opening/closing device of claim 8, wherein in an automatic mode, the protrusion (43) of the hinge shaft (42) is caught between the peak portions (32) of the hinge cam (30) to rotate the hinge cam together with the hinge shaft, and in a manual mode, the peak portions of the hinge cam push the protrusion of the hinge shaft to retreat the deceleration module (40) axially.

10. The sub-body opening/closing device of claim 9, wherein in order to move the deceleration module (40) axially within the hinge arm (20), a protrusion (441) is formed on an outer circumferential surface of the module housing (440) of the deceleration module (140) and a guide slit (22) is formed on the inner circumferential surface of the hinge arm, for guiding the protrusion axially.

11. The sub-body opening/closing device of one of claims 2 or 3, further comprising a hollow spacer (60) inserted into the hinge arm (20) for supporting one end of the elastic member (50).

12. The sub-body opening/closing device of one of claims 1 to 3, wherein the elastic member (50) is a coil spring.

13. The sub-body opening/dosing device of claims 1 to 12, wherein:
the hinge shaft (42) includes a male cam surface at a distal end thereof,
the hinge cam (30) at one end has a female cam surface configured to match the male cam surface of the hinge shaft, and at an other end is secured to one of the main body (110) or the sub-body (120), and
the elastic member (50) is for biasing the hinge shaft toward the hinge cam and thereby transfers the rotation power of the driving motor (41) to the hinge cam in an automatic opening/closing mode.

14. The sub-body opening/closing device of claim 13, wherein the hinge shaft (42) is subject to axial retraction from the hinge cam (30) to enable opening or closing of the sub-body (120) in a manual opening/closing mode.

15. The sub-body opening/closing device of claim 13, wherein the deceleration module (40) includes a gear module (430) having at least two gears (432).

16. The sub-body opening/closing device of claim 15, wherein the deceleration module (40) further includes a rotator (450) operatively connected to the gear module (430).

17. The sub-body opening/closing device of claim 16, wherein the rotator (450) includes a rotating gear (451) having gear teeth along the inner circumferential surface thereof for engaging with the gears (432) of the gear module (430).

18. The sub-body opening/closing device of claim 17, wherein the hinge shaft (42) and the rotator (450) are formed integrally of plastic material.

19. A foldable wireless terminal comprising:
a main body (110);
a sub-body (120) capable of folding and unfolding with respect to the main body; and
the opening/closing device of one of claims 1 to 18 for automatically or manually opening or closing the sub-body with respect to the main body by user selection.

## Patentansprüche

1. Nebenkörper-Öffnungs-Schließ-Vorrichtung für ein Klapp-Funktelefon (100) mit einem Hauptkörper (110) und einem Nebenkörper (120), wobei die Öffnungs-Schließ-Vorrichtung verwendet werden kann, um den Nebenkörper in Bezug auf den Hauptkörper des Funktelefons automatisch oder manuell zu öffnen oder zu schließen und die Öffnungs-Schließ-Vorrichtung umfasst:
einen Gelenknocken (30), der ein Ende hat, das an dem Hauptkörper oder dem Nebenkörper befestigt ist;
einen Antriebsmotor (41);
ein Abbremsmodul (40), das axial bewegt werden kann und eine Gelenkwelle (42) sowie einen Dreheinrichtung (450) enthält, wobei die Gelenkwelle den Gelenknocken in einem Automatikmodus durch Drehung des Antriebsmotors selektiv dreht; und
ein elastisches Element (50), das das Abbremsmodul axial spannt;
**dadurch gekennzeichnet, dass**
die Dreheinrichtung (450) ein Dreh-Zahnrad (451) hat, das Zähne an seiner Innenumfangsfläche aufweist, um in Zahneingriff mit wenigstens einem Stirnrad eine Kraft aufzunehmen, wobei das wenigstens eine Stimrad mit dem Antriebsmotor in Eingriff ist; und
die Gelenkwelle (42) integral mit dem Dreh-Zahnrad ausgebildet ist.

2. Nebenkörper-Öffnungs-Schließ-Vorrichtung nach Anspruch 1, die des Weiteren umfasst:
einen hohlen Gelenkarm (20), in dem der Antriebsmotor (41), das Abbremsmodul (40) und die Gelenkwelle (42) eingeschlossen sind.

3. Nebenkörper-Öffnungs-Schließ-Vorrichtung nach Anspruch 1, die des Weiteren umfasst:
einen hohlen Gelenkarm (20), in dem der Gelenknocken (30), das Abbremsmodul (40) und das elastische Element (50) in Reihe eingeschlossen sind, wobei der Gelenkarm (20) an dem Hauptkörper (110) oder dem Nebenkörper (120) angebracht ist, um als ein Gelenkmodul zu wirken.

4. Nebenkörper-Öffnungs-Schließ-Vorrichtung nach einem der Ansprüche 1 bis 3, wobei das Abbremsmodul (40) des Weiteren umfasst:
den Antriebsmotor (41) mit einem Stimrad (410), das an einer Antriebswelle angebracht ist;
ein hohles Leit-Zahnrad (420), das an dem Antriebsmotor angebracht ist, wobei das Stimrad des Antriebsmotors in dieses eingeführt ist und Zähne an seiner Innenumfangsfläche aufweist;
ein Getriebemodul (430), das wenigstens zwei drehbare Stimräder (432) in einem einzelnen zylindrischen Kasten (431) aufweist und teilweise in Zahneingriff mit dem Leit-Zahnrad sowie dem Stimrad des Antriebsmotors in das Leit-Zahnrad eingeführt ist, wobei das Dreh-Zahnrad (451) die Kraft mit den Stimrädem des Getriebemoduls aufnimmt; und
ein Modulgehäuse (440), das ein Ende hat, das an dem Antriebsmotor befestigt ist und in dem das Leitrad und das Getriebemodul eingeschlossen sind, wobei das Getriebemodul drehbar in dem Dreh-Zahnrad der Dreheinrichtung angeordnet ist.

5. Nebenkörper-Öffnungs-Schließ-Vorrichtung nach Anspruch 4, wobei das Leitrad (420) und das Modulgehäuse (440) an einem Träger (460) befestigt sind, der an dem Antriebsmotor (41) angebracht ist.

6. Nebenkörper-Öffnungs-Schließ-Vorrichtung nach Anspruch 5, wobei das Modulgehäuse (440) so aufgebaut ist, dass es an dem Träger (440) in einer Einraststruktur angebracht wird.

7. Nebenkörper-Öffnungs-Schließ-Vorrichtung nach Anspruch 4, wobei das Dreh-Zahnrad (451) und die Gelenkwelle (42) der Dreheinrichtung (450) durch Spritzgießen integral aus Kunststoff ausgebildet werden.

8. Nebenkörper-Öffnungs-Schließ-Vorrichtung nach einem der Ansprüche 2 oder 3, wobei der Gelenknocken (30) ein Paar Spitzenabschnitte (32) und einen Talabschnitt (31) in seiner Mitte aufweist und die Gelenkwelle (42) einen Vorsprung hat, der in den Talabschnitt des Gelenknockens gepasst wird.

9. Nebenkörper-Öffnungs-Schließ-Vorrichtung nach Anspruch 8, wobei in einem Automatikmodus der Vorsprung (43) der Gelenkwelle (42) zwischen den spitzen Abschnitten (32) des Gelenknockens (30) eingeschlossen wird, um den Gelenknocken zusammen mit der Gelenkwelle zu drehen, und in einem manuellen Modus die Spitzenabschnitte des Gelenknockens den Vorsprung der Gelenkwelle so schieben, dass das Abbremsmodul (40) axial eingezogen wird.

10. Nebenkörper-Öffnungs-Schließ-Vorrichtung nach Anspruch 9, wobei, um das Abbremsmodul (40) axial innerhalb des Gelenkarms (20) zu bewegen, ein Vorsprung (441) an einer Außenumfangsfläche des Modulgehäuses (440) des Abbremsmoduls (140) ausgebildet ist und ein Führungsschlitz an der Innenumfangsfläche des Gelenkarms ausgebildet ist, um den Vorsprung axial zu führen.

11. Nebenkörper-Öffnungs-Schließ-Vorrichtung nach einem der Ansprüche 2 oder 3, die des Weiteren einen hohlen Abstandshalter (60) umfasst, der in den Gelenkarm (20) eingeführt ist, um ein Ende des elastischen Elementes (50) zu tragen.

12. Nebenkörper-Öffnungs-Schließ-Vorrichtung nach einem der Ansprüche 1 bis 3, wobei das elastische Element (50) eine Schraubenfeder ist.

13. Nebenkörper-Öffnungs-Schließ-Vorrichtung nach den Ansprüchen 1 bis 12, wobei:
die Gelenkwelle (42) eine Außen-Kurvenfläche an einem distalen Ende derselben enthält,
der Gelenknocken (30) an einem Ende eine Innen-Kurvenfläche aufweist, die so aufgebaut ist, dass sie der Außen-Kurvenfläche der Gelenkwelle entspricht, und an einem anderen Ende an dem Hauptkörper (110) oder dem Nebenkörper (120) befestigt ist, und
das elastische Element (50) dazu dient, die Gelenkwelle auf den Gelenknocken zuzuspannen, und so in einem automatischen Öffnungs-Schließ-Modus die Drehkraft des Antriebsmotors (41) auf den Gelenknocken überträgt.

14. Nebenkörper-Öffnungs-Schließ-Vorrichtung nach Anspruch 13, wobei die Gelenkwelle (42) axial von dem Gelenknocken (30) weg eingezogen wird, um Öffnen oder Schließen des Nebenkörpers (120) in einem manuellen Öffnungs-Schließ-Modus zu ermöglichen.

15. Nebenkörper-Öffnungs-Schließ-Vorrichtung nach Anspruch 13, wobei das Abbremsmodul (40) ein Getriebemodul (430) mit wenigstens zwei Zahnrädern (432) enthält.

16. Nebenkörper -Öffnungs-Schließ-Vorrichtung nach Anspruch 15, wobei das Abbremsmodul (40) des Weiteren eine Dreheinrichtung (450) enthält, die funktionell mit dem Getriebemodul (430) verbunden ist.

17. Nebenkörper-Öffnungs-Schließ-Vorrichtung nach Anspruch 16, wobei die Dreheinrichtung (451) ein Dreh-Zahnrad (451) enthält, das Zähne entlang seiner Innenumfangsfläche zum Eingriff mit den Zahnrädern (432) des Getriebemoduls (430) aufweist.

18. Nebenkörper-Öffnungs-Schließ-Vorrichtung nach Anspruch 17, wobei die Gelenkwelle (42) und die Dreheinrichtung (450) integral aus Kunststoffmaterial ausgebildet sind.

19. Klapp-Drahtlos-Endgerät, das umfasst:
einen Hauptkörper (110);
einen Nebenkörper (120), der in Bezug auf den Hauptkörper auf- und zugeklappt werden kann; und
die Öffnungs-Schließ-Vorrichtung nach einem der Ansprüche 1 bis 18 zum automatischen oder manuellen Öffnen oder Schließen des Nebenkörpers in Bezug auf den Hauptkörper durch Auswahl des Benutzers.

## Revendications

1. Dispositif d'ouverture/fermeture d'un corps secondaire pour un radiotéléphone repliable (100) ayant un corps principal (110) et un corps secondaire (120), le dispositif d'ouverture/fermeture pouvant être utilisé pour ouvrir ou fermer automatiquement ou manuellement le corps secondaire par rapport au corps principal du radiotéléphone, le dispositif d'ouverture/fermeture comportant :
une came (30) de charnière qui comporte une extrémité fixée au corps principal ou au corps secondaire ;
un moteur d'entraînement(41) ;
un module de ralentissement (40) mobile axialement et comprenant un arbre (42) de charnière et un organe tournant (450), l'arbre de charnière faisant tourner sélectivement la came de charnière dans un mode automatique par une rotation du moteur d'entraînement ; et
un élément élastique (50) destiné à rappeler axialement le module de ralentissement ;
**caractérisé en ce que**
l'organe de rotation (450) comporte une pièce tournante d'engrenage (451) qui comporte des dents sur sa surface circonférentielle intérieure pour recevoir une force par engagement entre dents avec au moins une roue à denture droite, la, au moins une, roue à denture droite étant engagée avec le moteur d'entraînement ; et
l'arbre (42) de charnière est formé d'une seule pièce avec la pièce d'engrenage tournante.

2. Dispositif d'ouverture/fermeture de corps secondaire selon la revendication 1, comportant en outre :
un bras creux (20) de charnière destiné à renfermer en lui le moteur d'entraînement (41), le module de ralentissement (40) et l'arbre (42) de charnière.

3. Dispositif d'ouverture/fermeture de corps secondaire selon la revendication 1, comportant en outre :
un bras creux (20) de charnière destiné à renfermer la came (30) de charnière, le module de ralentissement (40) et l'élément élastique (50) en série, le bras (20) de charnière étant monté sur le corps principal (110) ou le corps secondaire (120) afin d'agir en tant que module de charnière.

4. Dispositif d'ouverture/fermeture de corps secondaire selon l'une quelconque des revendications 1 à 3, dans lequel le module (40 de ralentissement comporte en outre :
le moteur d'entraînement (41) ayant un pignon à denture droite (410) monté sur un arbre d'entraînement ;
une pièce d'engrenage creuse (420) de guidage montée sur le moteur d'entraînement, dans laquelle est inséré le pignon à denture droite du moteur d'entraînement et ayant des dents sur sa surface circonférentielle intérieure ;
un module (430) d'engrenage ayant au moins deux pignons tournants (432) à denture droite dans un boîtier cylindrique unique (431) et partiellement inséré dans la pièce d'engrenage de guidage en prise entre dents avec la pièce d'engrenage de guidage et le pignon à denture droite du moteur d'entraînement, la pièce d'engrenage tournante (451) recevant la force à l'aide des pignons à denture droite du module d'engrenage ; et
un boîtier (440) de module ayant une extrémité fixée au moteur d'entraînement, destiné à renfermer la pièce d'engrenage de guidage et le module d'engrenage, le module d'engrenage étant disposé de façon à pouvoir tourner à l'intérieur de la pièce d'engrenage tournante de l'organe rotatif.

5. Dispositif d'ouverture/fernneture de corps secondaire selon la revendication 4, dans lequel la pièce d'engrenage de guidage (420) et le boîtier (440) du module sont fixés à un support (460) monté sur le moteur d'entraînement (41).

6. Dispositif d'ouverture/fermeture de corps secondaire selon la revendication 5, dans lequel le boîtier (440) du module est configuré pour être monté sur le support (460) dans une structure à encliquetage.

7. Dispositif d'ouverture/fermeture de corps secondaire selon la revendication 4, dans lequel la pièce d'engrenage tournante (451) et l'arbre (42) de charnière de l'organe tournant (450) sont formés d'une seule pièce en matière plastique par moulage par injection.

8. Dispositif d'ouverture/fermeture de corps secondaire selon l'une quelconque des revendications 2 et 3, dans lequel la came (30) de charnière comporte deux parties de becs (32) et une partie de creux (31) en son centre et l'arbre (42) de charnière comporte une saillie (43) destinée à s'ajuster dans la partie de creux de la came de charnière.

9. Dispositif d'ouverture/fermeture de corps secondaire selon la revendication 8, dans lequel, dans un mode automatique, la saillie (43) de l'arbre (42) de charnière est prise entre les parties de becs (32) de la came (30) de charnière pour faire tourner la came de charnière avec l'arbre de charnière et, dans un mode manuel, les parties de becs de la came de charnière poussent la saillie de l'arbre de charnière pour rétracter axialement le module (40) de ralentissement.

10. Dispositif d'ouverture/fermeture de corps secondaire selon la revendication 9, dans lequel, pour déplacer axialement le module (40) de ralentissement dans le bras (20) de charnière, une saillie (441) est formée sur une surface circonférentielle extérieure du boîtier (440) du module (140) de ralentissement et une fente de guidage (22) est formée sur la surface circonférentielle intérieure du bras de charnière, pour guider la saillie axialement.

11. Dispositif d'ouverture/fermeture de corps secondaire selon l'une quelconque des revendications 2 et 3, comportant en outre une entretoise creuse (60) insérée dans le bras (20) de charnière pour supporter une extrémité de l'élément élastique (50).

12. Dispositif d'ouverture/fermeture de corps secondaire selon l'une quelconque des revendications 1 à 3, dans lequel l'élément élastique (50) est un ressort hélicoïdal.

13. Dispositif d'ouverture/fermeture de corps secondaire selon les revendications 1 à 12, dans lequel :
l'arbre (42) de charnière présente une surface de came mâle à une extrémité distale de cet arbre,
la came (30) de charnière présente, à une extrémité, une surface de came femelle configurée pour s'adapter à la surface de came mâle de l'arbre de charnière et est fixée, par une autre extrémité, à l'un du corps principal (110) et du corps secondaire (120), et
l'élément élastique (50) est destiné à rappeler l'arbre de charnière vers la came de charnière et à transférer ainsi la force de rotation du moteur d'entraînement (41) à la came de charnière dans un mode d'ouverture/fermeture automatique.

14. Dispositif d'ouverture/fermeture de corps secondaire selon la revendication 13, dans lequel l'arbre (42) de charnière est soumis à un retrait axial à partir de la came (30) de charnière pour permettre l'ouverture ou la fermeture du corps secondaire (20) dans un mode d'ouverture/fermeture manuel.

15. Dispositif d'ouverture/fermeture de corps secondaire selon la revendication 13, dans lequel le module (40) de ralentissement comprend un module (430) d'engrenage ayant au moins deux pièces d'engrenage (432).

16. Dispositif d'ouverture/fermeture de corps secondaire selon la revendication 15, dans lequel le module de ralentissement (40) comprend en outre un organe tournant (450) relié fonctionnement au module d'engrenage (430).

17. Dispositif d'ouverture/fermeture de corps secondaire selon la revendication 16, dans lequel l'organe tournant (450) comporte une pièce d'engrenage tournante (451) ayant des dents d'engrenage le long de sa surface circonférentielle intérieure pour entrer en prise avec les pièces d'engrenage (432) du module d'engrenage (430).

18. Dispositif d'ouverture/fermeture de corps secondaire selon la revendication 17, dans lequel l'arbre (42) de charnière et l'organe tournant (450) sont formés d'un seul bloc en matière plastique.

19. Terminal sans fil repliable comportant :
un corps principal (110) ;
un corps secondaire (120) pouvant être replié et déplié par rapport au corps principal ; et
le dispositif d'ouverture/fermeture selon l'une des revendications 1 à 18 pour ouvrir ou fermer automatiquement ou manuellement le corps secondaire par rapport au corps principal, au choix d'un utilisateur.
